# EUROPÄISCHE PATENTSCHRIFT

(11) **EP 2 660 501 B1**
(45) Veröffentlichungstag und Bekanntmachung des Hinweises auf die Patenterteilung: **17.06.2015**
(21) Anmeldenummer: 13166346.0
(22) Anmeldetag: 03.05.2013
(51) Int. Cl.: F16L 55/48, G01C 7/06, F16L 55/26

(54) **Verfahren zur Visualisierung der Position eines Fahrzeugs zur Befahrung eines Kanals**
Method for visualising the position of a vehicle for travelling on a canal
Procédé de visualisation de la position d'un véhicule pour emprunter un canal

(30) Priorität: 04.05.2012 DE 102012207415
(43) Veröffentlichungstag der Anmeldung: 06.11.2013
(73) Patentinhaber: SPERING micro-systems, 52076 Aachen (DE)
(72) Erfinder: Spering, Axel, 52076 Aachen (DE)
(74) Vertreter: Bauer, Dirk

(56) Entgegenhaltungen:
- EP-A1- 0 607 611
- WO-A2-2011/080590
- DE-A1-102010 044 465

## Beschreibung

### Einleitung

Die vorliegende Erfindung betrifft ein Verfahren zur Visualisierung der Position eines Fahrzeugs zur Befahrung eines Kanals innerhalb des Kanals auf einer Anzeigeeinrichtung.

### Stand der Technik

Bei Arbeiten in einem geschlossenen Kanal werden nach dem Stand der Technik häufig so genannte Roboter eingesetzt, die sowohl zur Begutachtung als auch zur Bearbeitung eines Kanals herangezogen werden können. Insbesondere für letztgenannten Zweck weisen derartige Roboter, die typischerweise als Fahrzeuge ausgebildet sind, mindestens ein Werkzeug auf.

Ein besonderes Arbeitsgebiet für derartige Fahrzeuge ist die Sanierung beschädigter Kanäle, wobei die Schäden sich vor allem in Undichtigkeiten der Kanalwandung widerspiegeln. Um derartige Schäden zu beheben, wird ein so genannter "Liner" in den jeweiligen Kanal eingezogen. Dabei handelt es sich um ein schlauchartiges, lang gestrecktes Gebilde, dass von einer Innenseite des Kanals her umlaufend an dessen innere Wandung angelegt wird und im Zuge dessen gewissermaßen eine neue Kanalwandung bildet, die die beschädigten Stellen überdeckt und abdichtet. Ein solcher Liner überdeckt jedoch neben unerwünschten Schäden auch solche Stellen, die bewusst offen gehalten sind. Hier sind vor allem Einläufe anderer Kanäle zu nennen, die selbstverständlich nach der Sanierung wieder geöffnet sein sollten.

Mittels eines vorgenannten Fahrzeugs beziehungsweise Roboters werden gemäß dem Stand der Technik schließlich diejenigen "Öffnungen" in der Kanalwandung, die unerwünschter Weise von dem Liner verschlossen wurden, bearbeitet, wobei beispielsweise ein bereits genanntes Werkzeug zum Einsatz kommt. Mittels eines solchen Werkzeugs kann die von dem Liner gebildete Wandung lokal aufgefräst oder aufgebohrt und auf diese Weise die gewünschte Öffnung in der originalen Kanalwandung wieder freigegeben werden.

In der Praxis ergeben sich hierbei insbesondere zwei Problematiken:
Zum einen ist nach dem Einziehen des Liners die Position der zuvor beispielsweise mittels einer Kamera leicht erkennbaren Einläufe nicht länger optisch feststellbar. Um das Fahrzeug nach Einziehen des Liners dennoch gezielt an die korrekten Stellen entlang des Kanals bewegen und mittels des Werkzeugs an den korrekten Stellen den Liner auffräsen zu können, wird gemäß dem Stand der Technik typischerweise bei einer zuvor durchgeführten Befahrung des Kanals mittels des Fahrzeugs ein Plan erstellt, der im Nachhinein eine korrekte Positionierung des Fahrzeugs sowie des Werkzeugs zulässt.

Diese Vorgehensweise ist insofern problematisch, als sie einer Vielzahl von Fehlerquellen unterliegt, die eine fehlerhafte Bearbeitung des Kanals beziehungsweise des Liners relativ wahrscheinlich werden lassen. Somit kommt es häufig vor, dass im Zuge der Auffräsung der mittels des Liners verschlossenen Einläufe einzelne dieser Einläufe vergessen werden, an falschen Stellen gebohrt wird, Einläufe nicht wieder auffindbar sind und dergleichen mehr. Insbesondere sind die nach dem Stand der Technik bekannten Hilfsmittel, die dem Geräteführer zur Verfügung stehen, häufig unzureichend, um für eine geringe Fehleranfälligkeit zu sorgen.

Zum anderen entsteht während der Bearbeitung des eingezogenen Liners mittels des Werkzeugs des Roboters Staub und Schmutz. Hilfsmittel zur Orientierung innerhalb des Kanals, die rein auf der Übermittlung von Bildaufnahmen einer Kamera oder dergleichen basieren, werden somit für den Geräteführer weitestgehend unbrauchbar, da durch die Verschmutzung ein freier Blick auf die jeweils bearbeitete Stelle typischerweise blockiert ist. Der Geräteführer kann demgemäß während des Arbeitsvorgangs keine genaue Aussage über die Ausrichtung des Werkzeugs, den Arbeitsfortschritt und dergleichen treffen. Stattdessen ist er angehalten, den Arbeitsvorgang periodisch durchzuführen, das heißt immer wieder zu unterbrechen und abzuwarten, bis sich der während der Bearbeitung gebildete Staub gelegt hat und eine freie Sicht auf die Kanalwandung wieder hergestellt ist. Die hierfür notwendige Zeit ist sehr störend, da die Freigabe der Einläufe besonders zeitkritisch ist. Diese dürfen nicht zu lange blockiert sein, da ansonsten sich das abfließende Wasser - beispielsweise aus einem angeschlossenen Wohngebäude - in dem Seitenkanal hochstaut und Schäden verursachen kann. Außerdem sollte die Bearbeitungszeit der fertigen Liner aus Kostengründen so kurz wie möglich gehalten werden.

Beispielsweise die DE 10 2010 044 465 A1 zeigt ein Fahrzeug, das mit Sensoren ausgestattet ist. Diese Sensoren nehmen Daten unter anderem über die Lage des Werkzeugs des Fahrzeugs auf und leiten diese an eine Auswerteeinheit, welche wiederum mit einer Anzeigeeinheit verbunden ist. Auf diese Anzeigeeinheit wird beispielsweise die Neigung des Roboters bezüglich dessen Längs- und Querachse dargestellt. Derartige Informationen können während des Arbeitsvorgangs zwar sehr sinnvoll seien, allerdings eignen sie sich nicht, um die vorbeschriebenen Problematiken zu lösen.

Aus der WO 2011/080590 A2 sind eine Vorrichtung und ein Verfahren zur Untersuchung eines unterirdischen Kanals bekannt, wobei die Vorrichtung eine Datenaufnahmeeinrichtung umfasst, die innerhalb des Kanals angeordnet und dort bewegt wird, um Daten betreffend Eigenschaften des Kanals aufzunehmen. Darüber hinaus umfasst die Vorrichtung eine Speichereinrichtung, die ebenfalls innerhalb des Kanals angeordnet und funktionell mit der Datenaufnahmeeinrichtung gekoppelt ist, während sich letztere innerhalb des Kanals befindet und entlang des Kanals bewegt wird. Die von der Datenaufnahmeeinrichtung erfassten Daten werden zumindest teilweise auch von Radardaten gebildet. Diese vorbekannte Vorrichtung umfasst nicht die Möglichkeit, die Position und die Ausrichtung des Fahrzeugs innerhalb des Kanals für den Bediener zu veranschaulichen.

Aus der EP 0 607 611 A1 ist ein Bearbeitungsroboter zur Positionierung innerhalb eines Rohres bekannt. Sowohl die Fortbewegung des Roboters innerhalb des Rohres als auch die Ausführung unterschiedlicher Bearbeitungsschritte wird von einer Kontrolleinrichtung außerhalb des Rohres überwacht und gesteuert. Der Roboter ist darüber hinaus mit einer Kamera und einer Beleuchtungseinrichtung versehen, um das Innere des Rohres und insbesondere den Bearbeitungsort und -fortschritt für den Bediener sichtbar zu machen. Zu diesem Zweck wird das von der Kamera aufgenommene Bild auf einem Monitor außerhalb des Rohres für den Bediener sichtbar gemacht. Auch wenn für den Bediener somit die jeweilige Umgebung des Roboters innerhalb des Rohres erkennbar ist, lässt sich daraus nicht die aktuelle Position des Roboters innerhalb des Rohres feststellen.

### Aufgabe

Der vorliegenden Erfindung liegt daher die Aufgabe zugrunde, ein Verfahren hervorzubringen, das dazu geeignet ist, den jeweiligen Geräteführer detaillierte Informationen über den Bearbeitungsstatus und die Position und die Ausrichtung des Fahrzeugs innerhalb des Kanals zu versorgen, ohne dass er hierfür auf die live Kameraaufnahme aus dem Kanal angewiesen ist.

### Lösung

Die zugrunde liegende Aufgabe wird erfindungsgemäß durch ein Verfahren zur Visualisierung der Position eines zur Befahrung eines Kanals geeigneten Fahrzeugs innerhalb des Kanals auf einer Anzeigeeinrichtung gelöst, wobei die Visualisierung auf der Anzeigeeinrichtung zumindest teilweise anhand mindestens einer virtuellen Darstellung erfolgt und der Kanal zumindest abschnittsweise und vorzugsweise in Form seine Hüllflächen definierender Linien auf der Anzeigeeinrichtung graphisch dargestellt wird und das Fahrzeug sowie vorzugsweise dessen Bewegung gleichfalls auf der Anzeigeeinrichtung und zwar innerhalb des Kanals dargestellt werden. Da die Darstellung auf der Anzeigeeinrichtung dabei zumindest teilweise virtuell ist, ist selbige unabhängig von realen Verschmutzungen oder sonstigen Behinderungen innerhalb des Kanals.

Unter einer "virtuellen Darstellung" wird im Sinne der vorliegenden Anmeldung jede Form der Darstellung auf der Anzeigeeinrichtung verstanden, die nicht von einer aktuell (beispielsweise mittels eines Kameramoduls) getätigten Realbildaufnahme stammt. Hierunter sind insbesondere künstlich erstellte Grafiken zu verstehen, die beispielsweise eine schematische Darstellung des Fahrzeugs oder des Kanals selbst umfassen. Allerdings ist es ebenso denkbar, dass beispielsweise eine Darstellung des Fahrzeugs auf der Anzeigeeinrichtung von einer Realaufnahme des Fahrzeugs gebildet ist, die zu einem früheren Zeitpunkt aufgenommen wurde. Da eine solche Darstellung jedoch nicht das jeweils aktuelle Abbild des Fahrzeugs beschreibt, handelt es sich dabei im Sinne der vorliegenden Anmeldung gleichermaßen um eine virtuelle Darstellung. Demzufolge bedingt der Umstand, dass das Fahrzeug als solches auf der Anzeigeeinrichtung dargestellt wird, bereits implizit die Verwendung einer virtuellen Darstellung. Dies liegt darin begründet, dass reale "live"-Bilder innerhalb des Kanals typischerweise mittels eines Kameramoduls aufgenommen werden, das an dem Fahrzeug montiert ist. Ein solches Kameramodul ist jedoch im Allgemeinen nicht dazu in der Lage und nicht dazu gedacht, sowohl das Fahrzeug selbst als auch gleichzeitig den Kanal aufzunehmen, da es nicht gleichzeitig auf das Fahrzeug als auch auf den Kanal gerichtet sein kann.

Unter einem "Kanal" wird im Sinne der vorliegenden Anmeldung zum einen ein einzelner Kanal beziehungsweise ein Kanalabschnitt, zum anderen ein aus einer Mehrzahl einzelner Kanäle verstandenes Netz von Kanälen (Kanalnetz) verstanden. Verzweigungen, Einläufe und dergleichen sind ebenfalls als Kanal im Sinne dieser Anmeldung zu verstehen.

Unter einer Anzeigeeinrichtung wird jedes Mittel zur Anzeige virtueller Graphiken und Wiedergabe realer Bildaufnahmen verstanden. Als solche sind insbesondere LCD- und LED-Bildschirme zu nennen, die heutzutage dem Stand der Technik entsprechen. Alternativ sind jedoch ebenso Röhrenmonitore, Projektoren und dergleichen denkbar.

Mittels des erfindungsgemäßen Verfahrens ist es dem Geräteführer des Fahrzeugs jederzeit möglich, die Position des Fahrzeugs virtuell auf der Anzeigeeinrichtung einsehen und überprüfen zu können. Vorteilhafterweise wird ihm sogar die Bewegung des Fahrzeugs angezeigt, so dass eine Art (zumindest teilweise) virtuelles Live-Bild des Inneren des Kanals entsteht. Dies hat den Vorteil, dass der Geräteführer auch während des Bearbeitungsvorgangs stets einen Eindruck von der Position und dem Arbeitsfortschritt erhält, wobei etwaige Behinderungen, die durch den Bearbeitungsvorgang selbst entstehen können, keinen Einfluss haben (beispielsweise Schmutzbelastung).

Ferner ist mittels der typischerweise idealisierten Darstellung, die beispielsweise lediglich wesentliche Teile des Kanals abbildet (beispielsweise unter Verwendung der beschriebenen Linienstruktur), der aktuelle Arbeitsfortschritt vom Geräteführer erheblich einfacher zu erfassen als dies gemäß dem Stand der Technik möglich ist. Dies gilt vor allem hinsichtlich bislang bearbeiteter sowie noch unbearbeiteter Abschnitte des Kanals und/oder Positionen im Kanal.

In einer vorteilhaften Ausgestaltung des erfindungsgemäßen Verfahrens sollten Daten betreffend die Position und die Bewegung des Fahrzeugs durch Aufzeichnung von Positionsänderungen des Fahrzeugs ausgehend von einer Startposition des Fahrzeugs, die in der Darstellung des Kanals bekannt ist, ermittelt werden. Liegen Daten des Kanals zugrunde - vorteilhafterweise, weil der Kanal ohnehin bereits in Form digitaler Daten erfasst ist und diese Daten übernommen werden können oder weil im Vorfeld der Bearbeitung eine Befahrung des Kanals stattgefunden hat, bei der entsprechende Daten gesammelt wurden - kann mittels der Positions- und Bewegungsdaten des Fahrzeugs ausgehend von der Startposition fortwährend die aktuelle Position des Fahrzeugs berechnet werden. Auf diese Weise ist die erfindungsgemäße Darstellung verlässlich, so dass der Geräteführer das Fahrzeug im Prinzip allein auf Basis der auf der Anzeigeeinrichtung angezeigten Visualisierung zuverlässig steuern kann. Ein reales Bild aus dem Inneren des Kanals wird hierdurch mehr und mehr entbehrlich.

Bei einer vorgeschalteten Befahrung des Kanals ist es besonders von Vorteil, wenn während der Befahrung Daten über den Verlauf des Kanals, insbesondere auch Daten über die Position und die Geometrie von Verzweigungen und/oder Einläufen anderer Kanäle in den Kanal, aufgenommen werden, wobei vorzugsweise die Datenerfassung mittels einer an dem Fahrzeug angeordneten Kamera erfolgt. Auf diese Weise entsteht ein ganzheitliches Bild des jeweiligen Kanals beziehungsweise Kanalnetzes, anhand dessen später ausgehend von einer Startposition das Fahrzeug allein anhand des virtuell angezeigten Kanals gesteuert werden kann.

Um dem Geräteführer seinen Arbeitsfortschritt zu verdeutlichen, ist es besonders empfehlenswert, die Verzweigungen und/oder Einläufe auf der Anzeigeeinrichtung graphisch hervorzuheben, insbesondere farbig darzustellen. Die heutzutage immer wieder zu beklagenden versehentliche Auslässe einzelner Einläufe bei der nachträglichen Bearbeitung sind mit Hilfe der farbigen Darstellung praktisch ausgeschlossen. Neben einer rein farblichen Darstellung ist gleichermaßen die Einblendung von Warnhinweisen und ähnlichem denkbar, sobald beispielsweise die Bearbeitung eines Einlaufs offensichtlich fälschlicherweise unterlassen wurde. Das Risiko aufwendiger und sehr kostspieliger Nacharbeiten wird dadurch praktisch auf Null reduziert.

Für die Darstellung des Kanals auf der Anzeigeeinrichtung ist insbesondere die Verwendung von Gitterlinien besonders vorteilhaft. Diese Darstellung liefert lediglich solche Details, die für den Führer des Fahrzeugs zwecks dessen Steuerung notwendig sind, während überflüssige Informationen ausgelassen werden. Somit eigenen sich die Gitterlinien besonders gut, um die Wandungen des Kanals sowie in diesen mündende Einläufe graphisch zu veranschaulichen.

Für einen höheren Grad an Realismus ist es jedoch ebenso denkbar, dass der Kanal auf der Anzeigeeinrichtung photographisch dargestellt wird oder reale Bildaufnahmen in die ansonsten virtuelle Darstellung eingeblendet werden. Dies kann mitunter einen besseren Eindruck der tatsächlichen Gegebenheiten im Kanal vermitteln und auf diese Weise den Bearbeitungsvorgang erleichtern und/oder beschleunigen. Die Wahl der geeigneten Darstellungsweise ist von der jeweiligen Bearbeitungssituation abhängig.

Das Verfahren ist ferner dann besonders vorteilhaft, wenn das Fahrzeug mindestens ein Werkzeug zur Bearbeitung insbesondere des Kanals, insbesondere ein Fräs- und/oder Bohrwerkzeug, sowie eine Kamera, insbesondere zur Überwachung des mit dem Werkzeug ausgeführten Bearbeitungsvorgangs, aufweist. Gerade für ein Fahrzeug, das mit einem solchen Werkzeug ausgestattet ist, lohnt die hier vorgeschlagene Visualisierung besonders, da - wie vorstehend bereits beschrieben wurde - insbesondere im Zuge des Einsatzes eines solchen Werkzeugs die Sicht innerhalb des Kanals erheblich beeinträchtigt sein kann, die Steuerung des Fahrzeugs auf Basis der Visualisierung hiervon jedoch völlig unbeeinträchtigt bleibt. Die Kamera, die letztendlich einen Eindruck der realen Bedingungen im Kanal vermitteln kann, ist im Hinblick auf eine optische Kontrolle des Bearbeitungsergebnisses besonders sinnvoll.

Besonders vorteilhaft ist eine solche Darstellung des Fahrzeugs, bei der selbiges auf der Anzeigeeinrichtung einen mit Rädern oder Gleisketten versehenen Korpus und mindestens einen innen damit beweglich verbundenen Arm besitzt, an dem vorzugsweise das Werkzeug und/oder die Kamera angeordnet ist. Ein solcher Detailreichtum der Darstellung auf der Anzeigeeinrichtung erleichtert dem Geräteführer die korrekte Bedienung, da er einen plastischen Eindruck der Stellung des Werkzeugs und des Fahrzeugs bekommt. Die Kontrolle der Position und der Ausrichtung von Fahrzeug und Werkzeug fällt auf diese Weise erheblich leichter.

Besonders vorteilhaft ist ein solches Verfahren, bei dem die Darstellung des Kanals auf der Anzeigeeinrichtung dreidimensional ist. Eine dreidimensionale Darstellung ist besonders gut geeignet, um einen realistischen Eindruck der Gegebenheiten in dem Kanal zu erhalten. Insbesondere ist die korrekte Ausrichtung und Positionierung des Fahrzeugs unter Zuhilfenahme einer dreidimensionalen Darstellung zu bevorzugen.

Zur besseren optischen Unterscheidbarkeit ist ferner eine solche Darstellung besonders von Vorteil, bei der das Fahrzeug und der Kanal in unterschiedlichen Farben auf der Anzeigeeinrichtung dargestellt sind.

Außerdem ist eine farbliche Abhebung solcher Abschnitte des Kanals, die bereits von dem Fahrzeug bearbeitet worden sind, von solchen Abschnitten des Kanals, die noch nicht bearbeitet sind, sinnvoll. Die ermöglicht eine fortwährende optische Kontrolle des Arbeitsfortschritts.

Zur korrekten Widergabe der Ausrichtung des Fahrzeugs und/oder dessen Werkzeugs und/oder dessen Arms ist ein solches Verfahren besonders zu bevorzugen, bei dem das Fahrzeug mittels mindestens eines an dem Fahrzeug angeordneten Lagesensors und/oder Winkelsensors lage- und/oder richtungsmäßig erfasst wird. Eine solche Erfassung ermöglicht letztendlich eine Steuerung des Fahrzeugs sowie von dessen Peripherie allein auf Basis der erfindungsgemäßen Visualisierung.

Dabei kann eine solche Darstellung besonders von Vorteil sein, bei der die Visualisierung auf der Anzeigeeinrichtung mehrteilig, vorzugsweise zweiteilig, vorgenommen wird, wobei weiter vorzugsweise ein erster Teil der Visualisierung die Position des Fahrzeugs innerhalb des Kanals und der zweite Teil der Visualisierung eine detaillierte Darstellung des Fahrzeugs und/oder eines Werkzeugs des Fahrzeugs umfasst. Diese Form der Darstellung ermöglicht eine detaillierte Betrachtung des Fahrzeugs bei gleichzeitiger Erfassung einer Übersicht des zu befahrenden oder zu bearbeitenden Kanals.

Für die Darstellung des Kanals ist vorstehend bereits die Möglichkeit der Darstellung die Hüllfläche bildender Linien des Kanals vorgeschlagen worden. Bei einer Darstellung, bei der die Füllflächen des Kanals vollständig "ausgefüllt" sind, also flächig dargestellt sind, kann es besonders von Vorteil sein, wenn zumindest an solchen Stellen des Kanals, an denen das Fahrzeug positioniert ist, auf der Anzeigeeinrichtung der Kanal transparent oder teil-transparent oder teilweise geöffnet dargestellt wird. Auf diese Weise ist das Fahrzeug innerhalb des Kanals stetig gut sichtbar und kann von dem Geräteführer eingesehen werden.

Alternativ hierzu ist ebenso eine stark minimalistische Darstellungsform auf der Anzeigeeinrichtung denkbar. Diese sieht vor, dass der Kanal sowie vorzugsweise eine Ausrichtung des Fahrzeugs innerhalb des Kanals lediglich mittels Körperachsen dargestellt sind. Unter Körperachsen sind hierbei solche Achsen zu verstehen, die einen jeweiligen Körper lagemäßig definieren. Als solche Achsen sind insbesondere eine Längs-, Hoch- und Querachse zu nennen. Derartige Körperachsen sind vorteilhafterweise für die relevanten Darstellungsbestandteile vorgesehen. Somit kann es beispielsweise vorteilhaft sein, eine Längsachse des Kanals ebenso zu veranschaulichen, wie die drei Lageachsen des Fahrzeugs und des Werkzeugs. Ferner ist eine Visualisierung der Längsachse sämtlicher Einläufe vorteilhaft, wobei Schnittstellen zwischen Einläufen und dem jeweiligen Hauptkanalabschnitt gleichfalls mittels Achsenkreuzen hervorgehoben werden. Letztendlich liefert eine solche stark idealisierte und vereinfachte Darstellungsform sämtliche relevanten Informationen, die der Geräteführer zur Durchführung beispielsweise einer Rohrsanierung benötigt.

### Ausführungsbeispiele

Die vorstehend beschriebene Erfindung ist nachfolgend anhand von Ausführungsbeispielen, die in den Figuren dargestellt sind, näher erläutert.

Es zeigt:
- Fig. 1:: Eine zweidimensionale Visualisierung einer Position eines Fahrzeugs innerhalb eines Kanals,
- Fig. 2:: Eine dreidimensionale Visualisierung einer Position eines Fahrzeugs innerhalb eines Kanals,
- Fig. 3:: Eine weitere dreidimensionale Visualisierung einer Position eines Fahrzeugs innerhalb eines Kanals, wobei der Kanal mittels dessen Hüllfläche definierender Linien dargestellt ist,
- Fig. 4:: Eine mögliche zweiteilige Visualisierung einer Position eines Fahrzeugs innerhalb eines Kanals und
- Fig. 5:: Eine weitere dreidimensionale Visualisierung einer Position eines Fahrzeugs innerhalb eines Kanals, wobei der Kanal mittels Körperachsen dargestellt ist.

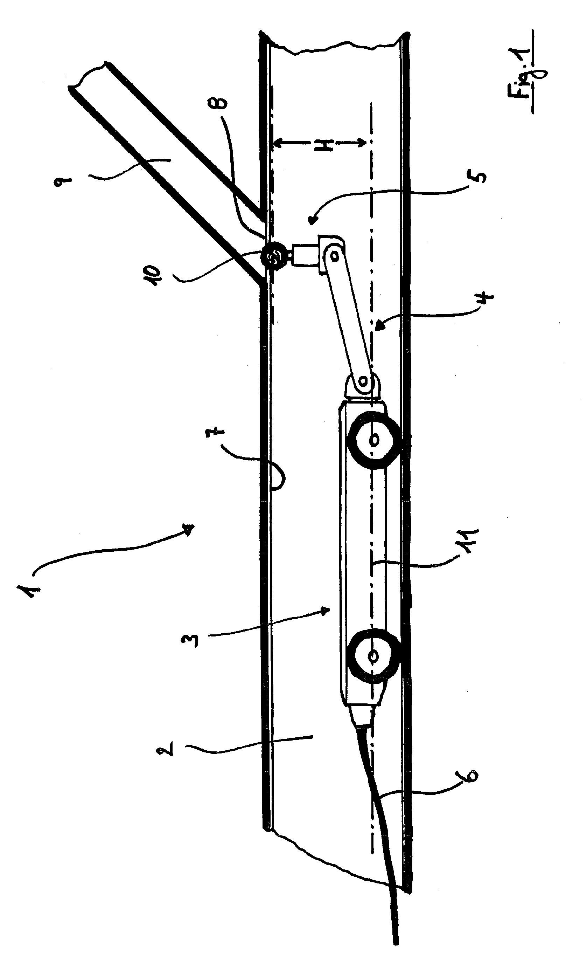

Ein erstes Ausführungsbeispiel, das in Figur 1 dargestellt ist, zeigt eine erste erfindungsgemäße Visualisierung 1, die hier als zweidimensionale Visualisierung ausgeführt ist. Diese zeigt einen Schnitt entlang einer Längsachse eines Kanals **2,** wobei innerhalb des Kanals **2** ein Fahrzeug **3** positioniert ist. Das Fahrzeug **3** weist an einem vorderen Ende einen Arm 4 sowie ein daran montiertes Werkzeug **5** auf. An einem hinteren Ende ist das Fahrzeug **3** mit einer Anschlussleitung **6** versehen, mittels derer an dem Fahrzeug **3** aufgezeichnete Daten ausgehend von dem Fahrzeug **3** hin zu einem nicht dargestellten Datenverarbeitungsgerät leitbar sind. Ferner ist mittels der Anschlussleitung **6** eine Entfernung des Fahrzeugs **3** gemessen von einem Startpunkt des Kanals **2** bestimmbar.

Die in Figur 1 gezeigte Visualisierung **1** würde typischerweise in Kombination mit mindestens einer weiteren zweidimensionalen Darstellung erfolgen, die einem Geräteführer des Fahrzeugs **3** ermöglicht, eine Position des Fahrzeugs **3** innerhalb des Kanals **2** genau zu bestimmen. Die gezeigte Visualisierung **1** ist insbesondere geeignet, um einen Eingriff des Werkzeugs **5** mit einer Wandung eines Liners **7** zu veranschaulichen, der im gezeigten Beispiel eine Öffnung **8** eines Einlaufs **9** überdeckt. Dieser Einlauf **9** soll mit Hilfe des Werkzeugs **5** freigelegt werden. Die Visualisierung **1** lässt den Werkzeugführer erkennen, dass eine Höhe H eines Werkzeugskopfes **10** des Werkzeugs **5** über einer Längsachse **11** des Fahrzeugs **3** gerade so gewählt ist, dass die Wandung des Liners **7** getroffen ist. Dem Geräteführer ist es mithin ermöglicht, die Position des Fahrzeugs **3** gewissermaßen "live" zu verfolgen, selbst wenn aufgrund eines Bearbeitungsvorgangs innerhalb des Kanals **2** eine direkte Sicht beispielsweise mittels einer Kamera stark beeinträchtigt sein sollte.

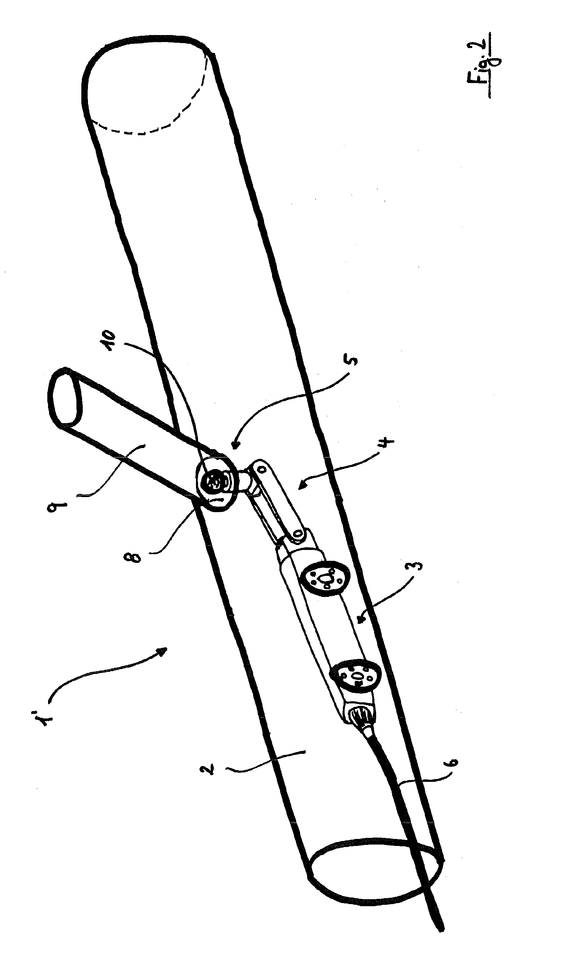

In einem weiteren Ausführungsbeispiel, das in Figur 2 dargestellt ist, ist eine dreidimensionale Visualisierung **1**' der bereits in Figur 1 gezeigten Position des Fahrzeugs **3** in dem Kanal **2** gezeigt. Aus dieser Visualisierung **1**' wird im Vergleich zur Visualisierung **1** insbesondere eine räumliche Lage des Einlaufs **9** auf einer Wandung des Kanals **2** deutlich. Eine Kombination der Visualisierungen **1** und **1**' ist ohne Weiteres denkbar, um dem Geräteführer unterschiedliche Perspektiven auf das Fahrzeug **3** sowie dessen Werkzeug **5** zu ermöglichen. Somit ist die zuvor beschriebene Höhe H aus der Visualisierung **1'** gemäß Figur 2 im Vergleich zur Visualisierung **1** gemäß Figur 1 weniger gut erkennbar, während die Lage des Einlaufs **9** an der Wandung des Kanals **2** aus Visualisierung **1** nicht eindeutig hervorgeht. Die Wandung des Kanals **2** in Visualisierung **1**' ist zumindest im Bereich des Fahrzeugs **3** transparent ausgebildet, so dass das Fahrzeug **3** durch die Wandung des Kanals **2** auf einer Anzeigeeinrichtung erkennbar ist.

In den Visualisierungen **1** und **1**' sind jeweils lediglich Ausschnitte des Kanals **2** gezeigt. Bei einer Umsetzung des erfindungsgemäßen Verfahrens ist es ohne weiteres denkbar, dass derartige Darstellungen, wie sie in den Figuren 1 und 2 gezeigt sind, lediglich einen vergrößerten Ausschnitt zeigen und beispielsweise mittels einer Zoomfunktion, die softwareseitig vorgesehen sein kann, weitere Teile des Kanals **2** sowie womöglich weitere vorhandene Einläufe in der Visualisierung **1, 1'** gezeigt werden können.

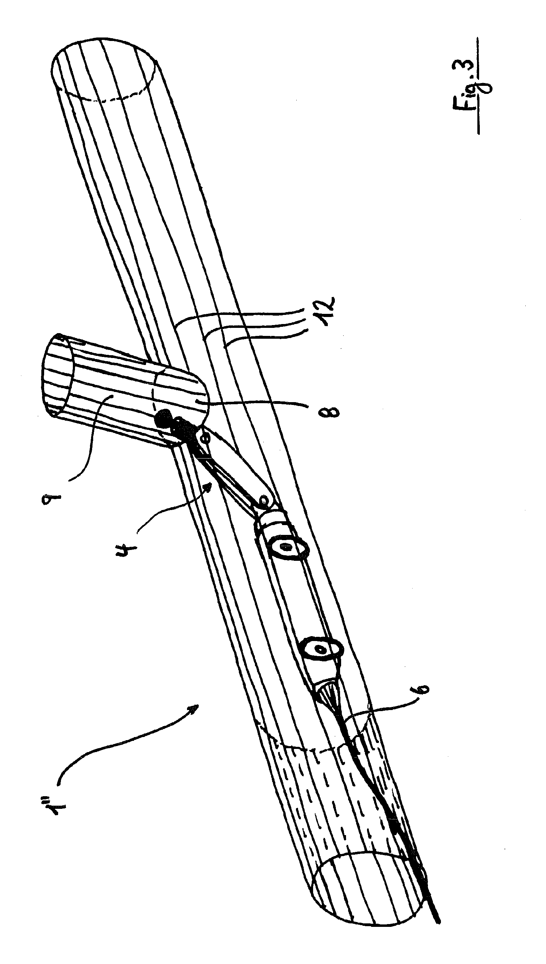

Figur 3 zeigt eine weitere dreidimensionale Visualisierung **1**" des Kanals **2,** wobei in diesem Beispiel der Kanal **2** mittels dessen Hüllfläche definierender Linien **12** veranschaulicht ist. Anstelle einer vollflächigen Darstellung der Hüllfläche, das heißt der Wandung des Kanals **2,** ist der Kanal **2** gemäß dem Beispiel aus Figur 3 also lediglich mittels der Linien **12** visualisiert. Dies erleichtert mitunter die Darstellbarkeit des Kanals **2** auf einer Anzeigeeinrichtung. Insbesondere kann hierdurch ein erforderlicher Rechenaufwand zur Visualisierung reduziert werden.

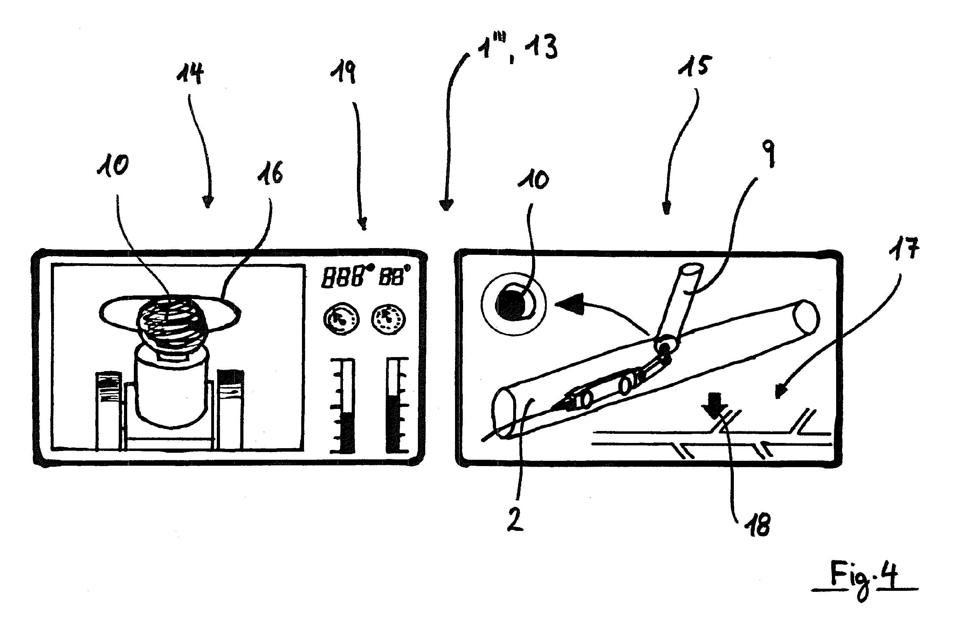

In einem weiteren Ausführungsbeispiel, das in Figur 4 gezeigt ist, ist eine Anzeigeeinrichtung **13** dargestellt, die zweiteilig ausgeführt ist. Das heißt, dass die Anzeigeeinrichtung **13** eine Visualisierung **1**"' zeigt, die aus zwei einzelnen Teilen **14, 15** gebildet ist. In einem linken Teil **14** ist ein Detail des Werkzeugkopfes **10** erkennbar, wobei mittels einer um den Werkzeugkopf **10** umlaufenden Linie **16** ein Bearbeitungsstatus erkennbar ist, wie weit bereits die Wandung des Liners **7** im Bereich des Einlaufs **9** aufgefräst wurde. Bei dem linken Teil **14** handelt es sich um eine reale Aufnahme, die von einer Kamera aufgenommen wird, die ebenso wie das Werkzeug **5** an dem Arm **4** des Fahrzeugs **3** angeordnet ist. Neben dieser realen Aufnahme sind dem linken Teil **14** der Visualisierung **1**'" ferner aktuelle Betriebsparameter **19** entnehmbar. Als solche sind beispielsweise Angaben über herrschende Temperatur, die Drehzahl des Werkzeugkopfes **10** des Werkzeugs **5,** Motorströme, Positionsangaben zum Fahrzeug **3** und/oder zum Werkzeugkopf **10** und dergleichen denkbar. Derartige Anzeigen erlauben dem Geräteführer eine Aussage über einen aktuellen Betriebszustand des Werkzeugs **5.** Insbesondere ermöglicht es, Probleme im Betrieb frühzeitig zu erkennen.

In dem rechten Teil **15** der Visualisierung **1**"' ist eine Darstellung gemäß Figur 2 gezeigt, wobei ferner eine Übersicht **17** dargestellt ist, die dem Geräteführer mittels eines Positionspfeils **18** verdeutlicht, an welcher Stelle des Kanals **2** sich das Fahrzeug gerade befindet. Bei dem rechten Teil **15** handelt es sich im Gegensatz zum linken Teil **14** um eine virtuelle Darstellung. Insbesondere in einer solchen Übersichtsdarstellung **17** ist es besonders gut denkbar, dass bereits bearbeitete Teilabschnitte des Kanals **2** und/oder bereits freigegebene Einläufe farbig hervorgehoben werden, um dem Geräteführer "auf einen Blick" den Arbeitsfortschritt zu verdeutlichen. Ein versehentliches Auslassen eines Einlaufs, wie es heutzutage mitunter zu beklagen ist, ist bei Verwendung dieser erfindungsgemäßen Visualisierung nahezu ausgeschlossen.

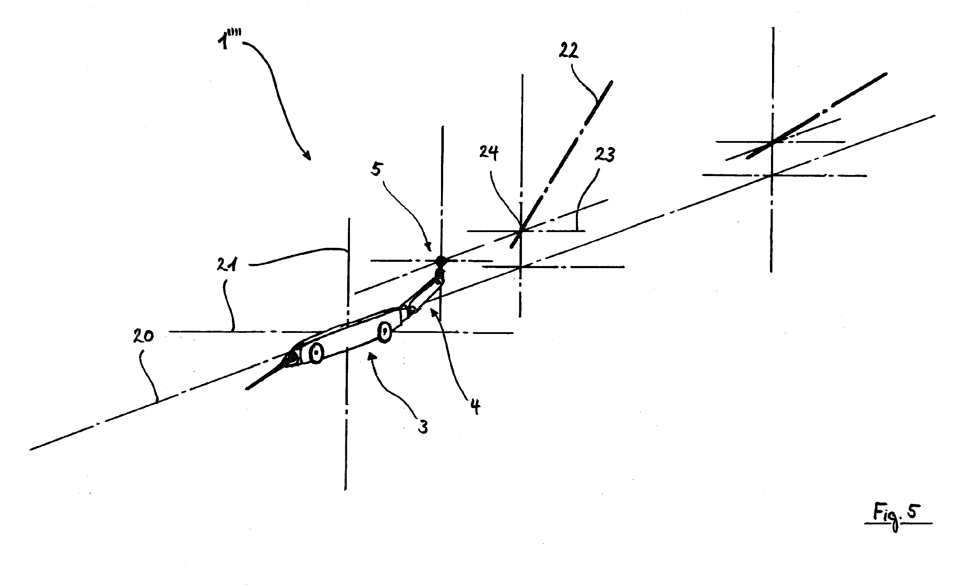

In einem weiteren Ausführungsbeispiel, das in Figur 5 abgebildet ist, ist eine weitere Visualisierung **1**"" dargestellt, die auf eine Darstellung des Kanals **2** als solches verzichtet. Dieser wird ebenso wie der Einlauf **9** lediglich mittels Körperachsen dargestellt, wobei insbesondere der Kanal **2** mittels einer Längsachse **20** visualisiert ist. Das Fahrzeug **3** inklusive Arm **4** und Werkzeug **5** ist als Körper in diese sehr abstrakte Form der Darstellung eingebunden, um die Anschaulichkeit der Visualisierung **1**"" zu erhalten. Sowohl das Fahrzeug **3** als auch das Werkzeug **5** sind jeweils mittels dreier Lagenachsen **21** in ihrer Position definiert, so dass der Geräteführer anhand dieser Lagenachsen **21** direkt einen Eindruck über die Position und die Ausrichtung sowohl des Fahrzeugs **3** als auch des Werkzeugs **5** erhält.

Der Einlauf **9** ist ähnlich zur Längsachse **20** des Kanals **2** mittels einer eigenen Längsachse **22** hervorgehoben. An einer Stelle, an der der Einlauf **9** die Wandung des Kanals **2** trifft, ist mittels einer Schnittachse **23** graphisch ein Schnittpunkt **24**von Kanal **2** und Einlauf **9** verdeutlicht. Auf diese Weise kann der Geräteführer das Werkzeug **5** genau zum Einlauf **9** ausrichten. Insbesondere ist es ihm bei dieser stark minimalisierten Form der Darstellung besonders einfach möglich, das Werkzeug **5** anhand von dessen Lagenachsen **21** an der Längsachse **22** des Einlaufs **9** auszurichten und den Liner **7** an dieser Stelle erfolgreich zu treffen und aufzufräsen.

Die Visualisierung **1**"" bietet außerdem den Vorteil, dass zu dessen Darstellung verhältnismäßig geringe Graphikleistungen eines Datenverarbeitungsapparats benötigt wird, um das Fahrzeug **3** und den Kanal **2** virtuell auf einer Anzeigeeinrichtung flüssig darzustellen.

### Bezugszeichenliste

- 1, 1', 1", 1"', 1"": Visualisierung
- 2: Kanal
- 3: Fahrzeug
- 4: Arm
- 5: Werkzeug
- 6: Anschlussleitung
- 7: Liner
- 8: Öffnung
- 9: Einlauf
- 10: Werkzeugkopf
- 11: Längsachse
- 12: Linie
- 13: Anzeigeeinrichtung
- 14: linker Teil
- 15: rechter Teil
- 16: Linie
- 17: Übersicht
- 18: Positionspfeil
- 19: Betriebsparameter
- 20: Längsachse
- 21: Lageachse
- 22: Längsachse
- 23: Schnittachse
- 24: Schnittpunkt

- H: Höhe

## Patentansprüche

1. Verfahren zur Visualisierung der Position eines zur Befahrung eines Kanals (2) geeigneten Fahrzeugs (3) innerhalb des Kanals (2) auf einer Anzeigeeinrichtung (13), wobei die Visualisierung auf der Anzeigeeinrichtung (13) zumindest teilweise anhand mindestens einer virtuellen Darstellung erfolgt und der Kanal (2) zumindest abschnittsweise und vorzugsweise in Form seine Hüllflächen definierender Linien (12) auf der Anzeigeeinrichtung (13) graphisch dargestellt wird und das Fahrzeug (3) sowie vorzugsweise dessen Bewegung gleichfalls auf der Anzeigeeinrichtung (13) und zwar innerhalb des Kanals (2) dargestellt werden.

2. Verfahren nach Anspruch 1, **dadurch gekennzeichnet, dass** Daten betreffend die Position und die Bewegung des Fahrzeugs (3) durch Aufzeichnung von Positionsänderungen des Fahrzeugs (3) ausgehend von einer Startposition des Fahrzeugs (3), die in der Darstellung des Kanals (2) bekannt ist, ermittelt werden.

3. Verfahren nach Anspruch 1 oder 2, **dadurch gekennzeichnet, dass** Daten betreffend den Kanal (2) aus einem vorhandenen, vorzugsweise in digitaler Form vorliegenden, Plan übernommen werden.

4. Verfahren nach Anspruch 1 oder 3, **dadurch gekennzeichnet, dass** Daten betreffend den Kanal (2) dadurch ermittelt werden, dass der Kanal (2) mit einem Fahrzeug (3) befahren wird und während der Befahrung Daten über den Verlauf des Kanals (2), insbesondere auch Daten über die Position und die Geometrie von Verzweigungen und/oder Einläufen (9) anderer Kanäle in den Kanal (2), aufgenommen werden, wobei vorzugsweise die Datenerfassung mittels einer an dem Fahrzeug (3) angeordneten Kamera erfolgt.

5. Verfahren nach Anspruch 4, **dadurch gekennzeichnet, dass** die Verzweigungen und/oder Einläufe (9) auf der Anzeigeeinrichtung (13) graphisch hervorgehoben, insbesondere farbig dargestellt werden.

6. Verfahren nach einem der Ansprüche 1 bis 5, **dadurch gekennzeichnet, dass** der Kanal (2) in Form von Gitterlinien auf der Anzeigeeinrichtung (13) dargestellt wird.

7. Verfahren nach einem der Ansprüche 1 bis 5, **dadurch gekennzeichnet, dass** der Kanal (2) auf der Anzeigeeinrichtung (13) photographisch dargestellt wird.

8. Verfahren nach einem der Ansprüche 1 bis 6, **dadurch gekennzeichnet, dass** das Fahrzeug (3) mindestens ein Werkzeug (5) zur Bearbeitung insbesondere des Kanals (2), insbesondere ein Fräs- und/oder Bohrwerkzeug, sowie eine Kamera, insbesondere zur Überwachung des mit dem Werkzeug (5) ausgeführten Bearbeitungsvorgangs, aufweist.

9. Verfahren nach einem der Ansprüche 1 bis 8, **dadurch gekennzeichnet, dass** das Fahrzeug (3) in der Darstellung auf der Anzeigeeinrichtung (13) einen mit Rädern oder Gleisketten versehenen Korpus und mindestens einen innen damit beweglich verbundenen Arm (4) besitzt, an dem vorzugsweise das Werkzeug (5) und/oder die Kamera angeordnet ist.

10. Verfahren nach einem der Ansprüche 1 bis 8, **dadurch gekennzeichnet, dass** die Darstellung des Kanals (2) auf der Anzeigeeinrichtung (13) dreidimensional ist.

11. Verfahren nach einem der Ansprüche 1 bis 9, **dadurch gekennzeichnet, dass** das Fahrzeug (3) auf der Anzeigeeinrichtung (13) in einer anderen Farbe dargestellt ist als der Kanal (2).

12. Verfahren nach einem der Ansprüche 1 bis 10, **dadurch gekennzeichnet, dass** Abschnitte des Kanals (2), die bereits von dem Fahrzeug (3) bearbeitet worden sind, anders, insbesondere in einer anderen Farbe, dargestellt sind, als die Abschnitte des Kanals (2), die noch nicht bearbeitet sind.

13. Verfahren nach einem der Ansprüche 1 bis 12, **dadurch gekennzeichnet, dass** eine Ausrichtung des Fahrzeugs (3) und/oder eines Arms (4) des Fahrzeugs (3) und/oder eines Werkzeugs (5) des Fahrzeugs (3) mittels mindestens eines an dem Fahrzeug (3) angeordneten Lagesensors und/oder Winkelsensors erfasst wird.

14. Verfahren nach einem der Ansprüche 1 bis 13, **dadurch gekennzeichnet, dass** die Visualisierung (1"') auf der Anzeigeeinrichtung (13) mehrteilig, vorzugsweise zweiteilig, vorgenommen wird, wobei weiter vorzugsweise ein erster Teil (15) der Visualisierung (1"') die Position des Fahrzeugs (3) innerhalb des Kanals (2) und der zweite Teil (14) der Visualisierung (1"') eine detaillierte Darstellung des Fahrzeugs (3) und/oder eines Werkzeugs (5) des Fahrzeugs (3) umfasst.

15. Verfahren nach einem der Ansprüche 1 bis 15, **dadurch gekennzeichnet, dass** zumindest an solchen Stellen des Kanals (2), an denen das Fahrzeug (3) positioniert ist, auf der Anzeigeeinrichtung (13) der Kanal (2) transparent oder teil-transparent oder teilweise geöffnet dargestellt wird.

16. Verfahren nach einem der Ansprüche 1bis 16, **dadurch gekennzeichnet, dass** der Kanal (2) sowie vorzugsweise eine Ausrichtung des Fahrzeugs (3) innerhalb des Kanals (2) mittels Körperachsen dargestellt sind.

## Claims

1. A method for the visualisation, on a display device (13), of the position of a vehicle (3) suitable for travelling through a channel (2) within the channel (2), wherein the visualisation on the display device (13) takes place at least partially by means of at least one virtual representation and the channel (2) is graphically represented on the display device (13) at least in sections and preferably in the form of lines (12) defining its enveloping surface, and the vehicle (3) as well as, preferably, its movement within the channel (2) is likewise represented on the display device (13).

2. The method according to claim 1, **characterised in that** data relating to the position and movement of the vehicle (3) is ascertained by means of logging changes in the position of the vehicle (3) beginning with a starting position of the vehicle (3) which is known in the representation of the channel (2).

3. The method according to claim 1 or 2, **characterised in that** data relating to the channel (2) is taken from an existing plan preferably available in digital form.

4. The method according to claim 1 or 3, **characterised in that** data relating to the channel (2) is ascertained by means of the channel (2) being travelled through by a vehicle (3) during the course of which data about the layout of the channel (2) and in particular about the position and geometry of forks and/or inflows (9) of other channels into the channel (2) is recorded, wherein the data collection preferably takes place by means of a vehicle (3) fitted with a camera.

5. The method according to claim 4, **characterised in that** the forks and/or inflows (9) are graphically highlighted on the display device (13), in particular in colour.

6. The method according to one of claims 1 to 5, **characterised in that** the channel (2) is represented on the display device (13) in the form of gridlines.

7. The method according to one of claims 1 to 5, **characterised in that** the channel (2) is represented photographically on the display device (13).

8. The method according to one of claims 1 to 6, **characterised in that** the vehicle (3) has at least one tool (5) for working on, in particular, the channel (2), in particular a milling and/or drilling tool, as well as a camera, in particular for monitoring the work carried out with the tool (5).

9. The method according to one of claims 1 to 8, **characterised in that** the vehicle (3) in the representation on the display device (13), has a body fitted with wheels or caterpillar tracks, which includes at least one flexibly attached arm (4), on which preferably the tool (5) and/or camera is disposed.

10. The method according to one of claims 1 to 8, **characterised in that** the representation of the channel (2) on the display device (13) is three-dimensional.

11. The method according to one of claims 1 to 9, **characterised in that** the vehicle (3) is represented on the display device (13) in a different colour to the channel (2).

12. The method according to one of claims 1 to 10, **characterised in that** sections of the channel (2) which have already been worked on by the vehicle (3) are differently represented, in particular in a different colour, than sections of the channel (2) which still have not been worked on.

13. The method according to one of claims 1 to 12, **characterised in that** an orientation of the vehicle (3) and/or of an arm (4) of the vehicle (3) and/or of a tool (5) of the vehicle (3) is detected by means of at least one position sensor and/or angle sensor disposed on the vehicle (3).

14. The method according to one of claims 1 to 13, **characterised in that** the visualisation (1"') on the display device (13) is effected in several parts, preferably in two parts, wherein further preferably a first part (15) of the visualisation (1"') comprises the position of the vehicle (3) inside the channel (2) and the second part (14) of the visualisation (1"') comprises a detailed representation of the vehicle (3) and/or a tool (5) of the vehicle (3).

15. The method according to one of claims 1 to 15, **characterised in that** at least in those places in the channel (2) in which the vehicle (3) is positioned, the channel (2) is represented on the display device (13) as transparent, or partially transparent or partially opened.

16. The method according to one of claims 1 to 16, **characterised in that** the channel (2) as well as preferably an orientation of the vehicle (3) inside the channel (2) are represented by means of body axes.

## Revendications

1. Procédé pour la visualisation de la position, à l'intérieur d'un canal (2), d'un véhicule (3) adapté pour circuler sur le canal (2), sur un dispositif d'affichage (13), dans lequel la visualisation sur le dispositif d'affichage (13) s'effectue au moins partiellement à l'aide d'au moins une représentation virtuelle et le canal (2) étant représenté, au moins par tronçons et de préférence sous la forme de lignes (12) définissant ses surfaces enveloppantes, de manière graphique, sur le dispositif d'affichage (13), et le véhicule (3) ainsi que de préférence ses mouvements étant également représentés sur le dispositif d'affichage (13), à savoir à l'intérieur du canal (2).

2. Procédé selon la revendication 1, **caractérisé en ce que** les données concernant la position et le mouvement du véhicule (3) sont déterminées par enregistrement de changements de position du véhicule (3) en partant d'une position de départ du véhicule (3), laquelle est connue dans la représentation du canal (2).

3. Procédé selon la revendication 1 ou 2, **caractérisé en ce que** les données concernant le canal (2) sont reprises à partir d'un plan existant se présentant de préférence sous forme numérique.

4. Procédé selon la revendication 1 ou 3, **caractérisé en ce que** des données concernant le canal (2) sont déterminées **en ce qu'**un véhicule (3) circule sur le canal (2) et **en ce que**, pendant la circulation, des données concernant le tracé du canal (2), en particulier également des données sur la position et la géométrie de ramifications et/ou entrées (9) d'autres canaux dans le canal (2), sont collectées, dans lequel la collecte des données s'effectue de préférence au moyen d'une caméra disposée sur le véhicule (3).

5. Procédé selon la revendication 4, **caractérisé en ce que** les ramifications et/ou entrées (9) sont mises en évidence de manière graphique sur le dispositif d'affichage (13), en particulier représentées en couleur.

6. Procédé selon l'une des revendications 1 à 5, **caractérisé en ce que** le canal (2) est représenté sous la forme de lignes de quadrillage sur le dispositif d'affichage (13).

7. Procédé selon l'une des revendications 1 à 5, **caractérisé en ce que** le canal (2) est représenté photographiquement sur le dispositif d'affichage (13).

8. Procédé selon l'une des revendications 1 à 6, **caractérisé en ce que** le véhicule (3) présente au moins un outil (5) pour le travail, en particulier du canal (2), en particulier un outil de fraisage et/ou forage, ainsi qu'une caméra, en particulier pour la surveillance du processus de travail exécuté avec l'outil (5).

9. Procédé selon l'une des revendications 1 à 8, **caractérisé en ce que** le véhicule (3) possède, dans la représentation sur le dispositif d'affichage (13), un corps muni de roues ou de chenilles et au moins un bras (4) relié avec de manière mobile à l'intérieur, sur lequel l'outil (5) et/ou la caméra est de préférence disposé(e).

10. Procédé selon l'une des revendications 1 à 8, **caractérisé en ce que** la représentation du canal (2) sur le dispositif d'affichage (13) est en trois dimensions.

11. Procédé selon l'une des revendications 1 à 9, **caractérisé en ce que** le véhicule (3) est représenté sur le dispositif d'affichage (13) dans une autre couleur que le canal (2).

12. Procédé selon l'une des revendications 1 à 10, **caractérisé en ce que** des tronçons du canal (2), lesquels ont déjà été travaillés par le véhicule (3), sont représentés différemment, en particulier dans une autre couleur, que les tronçons du canal (2) n'ayant pas encore été travaillés.

13. Procédé selon l'une des revendications 1 à 12, **caractérisé en ce qu'**une orientation, du véhicule (3) et/ou d'un bras (4) du véhicule (3) et/ou d'un outil (5) du véhicule (3) est détectée au moyen d'au moins un capteur de position et /ou capteur d'angle disposé sur le véhicule (3).

14. Procédé selon l'une des revendications 1 à 13, **caractérisé en ce que** la visualisation (1"') sur le dispositif d'affichage (13) est réalisée en plusieurs parties, de préférence en deux parties, dans lequel une première partie (15) de la visualisation (1"') comprend de préférence en outre la position du véhicule (3) à l'intérieur du canal (2) et la deuxième partie (14) de la visualisation (1"'), une représentation détaillée du véhicule (3) et/ou d'un outil (5) du véhicule (3).

15. Procédé selon l'une des revendications 1 à 15, **caractérisé en ce que**, au moins à ceux des endroits du canal (2) où est positionné le véhicule (3), le canal (2) est représenté de manière transparente ou partiellement transparente, ou en partie ouvert, sur le dispositif d'affichage (13).

16. Procédé selon l'une des revendications 1 à 16, **caractérisé en ce que** le canal (2) ainsi que de préférence une orientation du véhicule (3) à l'intérieur du canal (2), sont représentés au moyen d'axes de corps.
